# EUROPÄISCHE PATENTANMELDUNG

(11) **EP 4 749 561 A1**
(43) Veröffentlichungstag der Anmeldung: **27.05.2026**
(21) Anmeldenummer: 25216611.1
(22) Anmeldetag: 18.11.2025
(51) Int. Cl.: G06Q 50/18, G06Q 40/08, G06F 16/36

(54) **VERFAHREN UND VORRICHTUNG ZUM ERZEUGEN EINES LOGIKBASIERTEN BEWERTUNGSERGEBNISSES**

(30) Priorität: 25.11.2024 DE 102024134656
(71) Anmelder: FORBENCAP GmbH, 87527 Sonthofen (DE)
(72) Erfinder: Götz, Stefan, 85659 Forstern (DE)
(74) Vertreter: advotec.

(57) **Zusammenfassung**

Verfahren zum Erzeugen eines logikbasierten Bewertungsergebnisses zu einer automatisierten Subsumption eines Lebenssachverhaltes, insbesondere unter geltenden rechtlichen Normen, umfassend die Schritte: Bereitstellen (S1) von Daten, die den Lebenssachverhalt dokumentieren, wobei die Daten mindestens Text-, Bild-, Natural- und/oder sonstige Beweismittel umfassen; Verarbeitung (S2) der bereitgestellten Daten mittels eines maschinellen Lemmodells (200), um relevante Informationen aus den Daten zu extrahieren und diese in einer strukturierten Form darzustellen; Abgleich (S3) der strukturierten Informationen mit rechtlichen Normen und/oder Vorgaben durch ein Logiknetzwerk (202), das logische Schlussfolgerungen basierend auf den extrahierten Informationen und den rechtlichen Vorgaben zieht; Bewertung (S4) des Lebenssachverhaltes durch eine Subsumption der extrahierten Informationen unter die geltenden rechtlichen Normen auf Grundlage der Ergebnisse des Logiknetzwerks (202); und Ausgabe (S5) eines Bewertungsergebnisses, das eine Zuordnung des Lebenssachverhaltes zu den rechtlichen Normen umfasst.

## Beschreibung

Die vorliegende Erfindung betrifft das technische Gebiet der automatisierten Analyse und rechtlichen Bewertung von Lebenssachverhalten anhand von Beweismitteln, die in textueller, bildlicher, natürlicher oder sonstiger Form vorliegen. Insbesondere bezieht sich die Erfindung auf Verfahren und Vorrichtungen, die die Subsumption eines dokumentierten Lebenssachverhaltes unter geltende rechtliche Normen unterstützen.

### Stand der Technik

Der Stand der Technik umfasst derzeit manuelle Prozesse, bei denen Menschen Beweismittel sichten, die relevanten Sachverhalte identifizieren und diese mit den rechtlichen Vorgaben vergleichen. Dieser Ansatz ist jedoch zeitaufwändig, fehleranfällig und stößt insbesondere bei der sich stetig wandelnden Rechtslage an seine Grenzen. Rechtsprechung und gesetzliche Normen werden fortlaufend angepasst, erweitert oder neu interpretiert, um sich nationalen, regionalen oder internationalen Standards anzupassen. Dies führt dazu, dass Aktualisierungen für Anwender oft nicht rechtzeitig oder nicht vollständig verfügbar sind.

Die unzureichende Berücksichtigung neuer oder geänderter Normen kann dazu führen, dass Lebenssachverhalte falsch subsumiert und infolgedessen falsch bewertet werden. Diese Fehlbewertungen können schwerwiegende negative Rechtsfolgen nach sich ziehen, insbesondere wenn Entscheidungen auf fehlerhaften rechtlichen Bewertungen basieren. Zwar bieten moderne maschinelle Lernmodelle, insbesondere Sprachmodelle oder multimodale Modelle, vielversprechende Ansätze zur automatisierten Analyse von Text- und Bildinformationen. Dennoch weisen diese Modelle deutliche Einschränkungen auf, da sie auf probabilistischer Basis arbeiten und keine logischen Schlussfolgerungen ziehen können. Dies stellt ein erhebliches Hindernis dar, da die Subsumption rechtlicher Normen nicht nur die Analyse von Informationen, sondern auch das Herstellen logischer Zusammenhänge und den Abgleich mit rechtlichen Vorgaben erfordert.

Es ist eine Aufgabe der Erfindung, ein dahingehend verbessertes Verfahren und/oder eine dahingehend verbesserte Vorrichtung anzugeben.

### Offenbarung der Erfindung

Die Aufgabe wird gelöst durch ein Verfahren gemäß den Merkmalen des Patentanspruchs 1. Die Aufgabe wird gelöst durch eine Vorrichtung gemäß den Merkmalen des Patentanspruchs 10.

Gemäß einem bevorzugten Aspekt wird ein Verfahren zum Erzeugen eines logikbasierten Bewertungsergebnisses zu einer automatisierten Subsumption eines Lebenssachverhaltes, insbesondere unter geltenden rechtlichen Normen, vorgeschlagen. Das Verfahren umfasst das Bereitstellen von Daten, die den Lebenssachverhalt dokumentieren, wobei diese Daten in vielfältigen Formaten vorliegen können, einschließlich Text-, Bild-, Natural- und/oder sonstiger Beweismittel. Dadurch wird sichergestellt, dass die unterschiedlichsten Dokumentationsarten eines Sachverhaltes berücksichtigt werden können, was die Flexibilität und Anwendbarkeit des Verfahrens erhöht.

Ein weiteres Merkmal des Verfahrens ist die Verarbeitung der bereitgestellten Daten mittels eines maschinellen Lernmodells. Dieses Modell ist dazu ausgebildet, relevante Informationen aus den Daten zu extrahieren und diese in einer strukturierten Form darzustellen. Dies ermöglicht die effiziente und präzise Analyse großer Datenmengen, auch wenn diese unstrukturiert oder multimodal vorliegen. Die Verwendung maschineller Lernmodelle stellt hierbei sicher, dass auch komplexe Datenformate wie kombinierte Text-Bild-Dokumente oder natürliche Beweismittel durch automatisierte Prozesse zugänglich gemacht werden können.

Der Abgleich der strukturierten Informationen mit rechtlichen Normen und/oder Vorgaben erfolgt anschließend durch ein Logiknetzwerk. Dieses ist darauf ausgelegt, logische Schlussfolgerungen basierend auf den extrahierten Informationen und den geltenden Vorgaben zu ziehen. Im Vergleich zu rein maschinellen Lernmodellen ermöglicht das Logiknetzwerk eine präzisere und nachvollziehbare Verarbeitung, da es dedizierte Schlussfolgerungsmechanismen nutzt, die auf festgelegten Regeln oder Ontologien basieren. Die Einbindung eines Logiknetzwerks adressiert die Schwäche rein probabilistischer Modelle, die keine explizite Logik abbilden können.

Ein weiterer Schritt des Verfahrens ist die Bewertung des Lebenssachverhaltes durch eine Subsumption der extrahierten Informationen unter die geltenden rechtlichen Normen, basierend auf den Ergebnissen des Logiknetzwerks. Diese Bewertung ermöglicht eine systematische und konsistente Zuordnung der Sachverhalte zu den Normen. Durch die strukturierte Kombination der Daten aus dem maschinellen Lernmodell **und** den Schlussfolgerungen des Logiknetzwerks wird eine höhere Genauigkeit der Bewertung erzielt.

Die Ausgabe des Bewertungsergebnisses umfasst eine Zuordnung des Lebenssachverhaltes zu den rechtlichen Normen. Zusätzlich können Hinweise auf relevante rechtliche Änderungen oder Unsicherheiten gegeben werden. Diese Funktion stellt sicher, dass auch aktuelle Entwicklungen in der Rechtslage in die Bewertung einfließen, was die Aktualität **und** Relevanz des Verfahrens erhöht.

Das Verfahren kann dahingehend erweitert werden, dass das Logiknetzwerk dynamisch anpassbar gestaltet wird. Hierdurch könnten neue Regeln oder Ontologien automatisch integriert werden, beispielsweise durch die Verarbeitung von Aktualisierungen in Normendatenbanken oder anderen Quellen. Zudem könnte eine iterative Feedback-Schleife zwischen dem maschinellen Lernmodell **und** dem Logiknetzwerk eingeführt werden, um die Relevanz der extrahierten Informationen kontinuierlich zu verbessern und Unsicherheiten zu minimieren.

Beweismittel umfassen vorzugsweise alle Informationen und Materialien, die geeignet sind, einen Lebenssachverhalt zu dokumentieren oder zu veranschaulichen, unabhängig von ihrer Form, ihrem Medium oder ihrer Herkunft. Vorzugsweise dienen diese als Grundlage für die automatisierte Analyse, Subsumption **und** rechtliche Bewertung. Dazu zählen vorzugsweise textuelle Beweismittel wie schriftliche oder digitale Dokumente, beispielsweise Verträge, Rechnungen, Berichte, E-Mails, Gerichtsurteile, Gesetzestexte sowie Notizen oder handschriftliche Aufzeichnungen, die gegebenenfalls durch optische Zeichenerkennung digitalisiert wurden. Ferner umfassen Beweismittel vorzugsweise bildliche Informationen, etwa Fotografien, die Szenen, Objekte oder Ereignisse darstellen, Grafiken, Pläne oder Diagramme sowie Videoaufnahmen, die Bewegungsbilder oder Abläufe dokumentieren. Natürliche Beweismittel umfassen vorzugsweise Spracheingaben wie aufgezeichnete Gespräche oder Sprachprotokolle sowie Audiodaten mit relevanten akustischen Informationen, beispielsweise Aussagen oder Umgebungsgeräusche. Zusätzlich können vorzugsweise sonstige Beweismittel herangezogen werden, etwa digitale Artefakte wie Metadaten, Standortdaten oder Zeitstempel, die im Zusammenhang mit einem Ereignis stehen, oder sensorische Daten von Geräten wie GPS, Thermometern oder Überwachungssystemen. Beweismittel können vorzugsweise auch Kombinationen verschiedener Arten umfassen, etwa Text in Verbindung mit dazugehörigen Bildern oder Videos. Sie stammen vorzugsweise aus unterschiedlichen Quellen, darunter digitalisierte Papierdokumente, digitale native Dokumente aus Datenbanken, sozialen Medien oder öffentlichen Plattformen sowie interne oder externe Akten. Diese Beweismittel werden vorzugsweise durch die technische Lösung der Erfindung aufbereitet, strukturiert und in eine Form überführt, die eine logische Subsumption unter geltende rechtliche Normen ermöglicht.

Ein Lebenssachverhalt bezeichnet vorzugsweise die Gesamtheit der tatsächlichen Umstände und Ereignisse, die im Zusammenhang mit einer rechtlichen Fragestellung stehen und rechtlich bewertet werden sollen. Er umfasst vorzugsweise sämtliche relevanten Fakten, Handlungen, Zustände und/oder Entwicklungen, die entweder unmittelbar oder mittelbar Bedeutung für die Anwendung einer rechtlichen Norm haben können. Ein Lebenssachverhalt bildet somit vorzugsweise die Grundlage für die rechtliche Subsumption, bei der geprüft wird, ob und wie die rechtlichen Vorgaben auf den konkreten Fall anwendbar sind. Typischerweise setzt sich ein Lebenssachverhalt aus verschiedenen Elementen zusammen, wie zum Beispiel den beteiligten Personen oder Institutionen, den Handlungs- oder Geschehensabläufen, den zeitlichen und örtlichen Gegebenheiten sowie den dazugehörigen Beweismitteln, die die Umstände dokumentieren. Die Erfassung eines Lebenssachverhalts kann sowohl durch textliche, bildliche, natürliche als auch sonstige Beweismittel erfolgen, die relevante Informationen enthalten und zur Klärung des Sachverhalts beitragen. In einem juristischen Kontext dient der Lebenssachverhalt als Ausgangspunkt für die Prüfung, ob die festgestellten Tatsachen die Voraussetzungen einer rechtlichen Norm erfüllen und welche rechtlichen Folgen sich daraus ergeben. Dabei können komplexe Lebenssachverhalte, die mehrere rechtliche Aspekte berühren, eine umfassende und strukturierte Analyse erfordern, um alle relevanten Fakten im Hinblick auf die anwendbaren Normen zu berücksichtigen.

Technische Vorteile des Verfahrens bestehen insbesondere in der Automatisierung und Beschleunigung von Prozessen, die bisher manuell durchgeführt werden mussten. Die Kombination von maschinellem Lernen und Logiknetzwerken ermöglicht eine präzisere **und** nachvollziehbarere Subsumption, selbst bei komplexen Lebenssachverhalten. Die Flexibilität bei der Verarbeitung multimodaler Daten gewährleistet eine breite Anwendbarkeit des Verfahrens, während die Möglichkeit, rechtliche Änderungen automatisch zu berücksichtigen, die Aktualität und Qualität der Ergebnisse erhöht. Durch die Integration einer strukturierten Ergebnisdarstellung wird darüber hinaus die Nachvollziehbarkeit der Bewertungen für Anwender sichergestellt, was insbesondere in rechtlichen oder normativen Kontexten von entscheidender Bedeutung ist.

Erstens führt die Verwendung eines maschinellen Lernmodells zur strukturierten Verarbeitung von Daten, einschließlich unstrukturierter oder multimodaler Formate, zu einer technischen Lösung des Problems der effizienten Analyse und Interpretation komplexer **und** heterogener Datensätze. Zweitens ermöglicht die Einbindung eines Logiknetzwerks, das logische Schlussfolgerungen basierend auf extrahierten Informationen **und** geltenden rechtlichen Normen zieht, eine präzise **und** nachvollziehbare Bewertung, die rein probabilistische Modelle nicht leisten können. Dies stellt einen technischen Fortschritt dar, da es die Modellgrenzen überwindet **und** eine systematische Subsumption sicherstellt. Drittens verbessert die dynamische Anpassbarkeit des Logiknetzwerks durch die Integration aktueller normativer Änderungen die Aktualität **und** Relevanz der Ergebnisse, was im technischen Kontext die langfristige Funktionalität und Wartbarkeit des Systems sicherstellt. Viertens resultiert die Automatisierung der zuvor manuell durchgeführten Prozesse in einer erheblichen Reduktion von Zeitaufwand **und** Fehleranfälligkeit, was einen technischen Beitrag zur Optimierung von Arbeitsabläufen darstellt. Schließlich führt die strukturierte Ausgabe der Bewertungsergebnisse, einschließlich der Berücksichtigung rechtlicher Änderungen, zu einer verbesserten Benutzerfreundlichkeit und Nachvollziehbarkeit.

Es versteht sich, dass die erfindungsmäßen Schritte sowie weitere optionale Schritte nicht notwendigerweise in der aufgezeigten Reihenfolge ausgeführt werden müssen, sondern auch in einer anderen Reihenfolge ausgeführt werden können. Ferner können weitere Zwischenschritte vorgesehen sein. Die einzelnen Schritte können zudem einen oder mehrere Unterschritte umfassen, ohne dass hierdurch der Umfang des erfindungsgemäßen Verfahrens verlassen wird.

Gemäß einem bevorzugten Aspekt wird eine Vorrichtung zum Erzeugen eines logikbasierten Bewertungsergebnisses zu einer automatisierten Subsumption eines Lebenssachverhaltes, insbesondere unter geltenden rechtlichen Normen, vorgeschlagen, wobei die Vorrichtung eine Auswerte- und Recheneinrichtung aufweist, die dazu ausgebildet ist, die folgenden Schritte auszuführen: Bereitstellen von Daten, die den Lebenssachverhalt dokumentieren, wobei die Daten mindestens Text-, Bild-, Natural- und/oder sonstige Beweismittel umfassen; Verarbeitung der bereitgestellten Daten mittels eines maschinellen Lernmodells, um relevante Informationen aus den Daten zu extrahieren und diese in einer strukturierten Form darzustellen; Abgleich der strukturierten Informationen mit rechtlichen Normen und/oder Vorgaben durch ein Logiknetzwerk, das logische Schlussfolgerungen basierend auf den extrahierten Informationen und den rechtlichen Vorgaben zieht; Bewertung des Lebenssachverhaltes durch eine Subsumption der extrahierten Informationen unter die geltenden rechtlichen Normen auf Grundlage der Ergebnisse des Logiknetzwerks; **und** Ausgabe eines Bewertungsergebnisses, das eine Zuordnung des Lebenssachverhaltes zu den rechtlichen Normen umfasst, sowie optional Hinweise zu relevanten rechtlichen Änderungen oder Unsicherheiten.

Die für das Verfahren gemachten Ausführungen gelten für die Vorrichtung entsprechend. Dabei versteht es sich, dass sprachliche Abwandlungen von verfahrensmäßig formulierten Merkmalen nach sprachüblicher Praxis für die Vorrichtung umformulierbar sind, ohne dass derartige Formulierungen explizit hier aufgeführt werden müssen.

Das Verfahren **und** die Vorrichtung bieten eine Weiterentwicklung und Optimierung von bisherigen Sprachmodellen, um eine höhere Genauigkeit **und** Transparenz zu erreichen. Dies ermöglicht es, beispielsweise einen bislang oftmals manuellen Prozess der Prüfung im juristischen Bereich und/oder bei der internationalen **und** nationalen Standardisierung und/oder Formular-Bearbeitung durch den Einsatz des vorliegend verbesserten Sprachmodell-Aufbaus effizienter zu gestalten und so ggf. Fehler zu minimieren. Zudem kann das eingesetzte mindestens eine Sprachmodell dazu dienen, Gesetzesänderungen und/oder Änderungen in der Standardisierungsprüfung und/oder Normenprüfung schneller **und** präziser in ein Prüfschemata zu integrieren und/oder ein Prüfungsschema entsprechend anzupassen, was den Übergangsprozess bei neuen Gesetzeslagen erleichtern kann.

Gemäß einem weiteren Aspekt wird ein Verfahren vorgeschlagen, bei dem das maschinelle Lernmodell ein multimodales Modell aufweist, das Text-, Bild- und/oder weitere Beweismittel, insbesondere simultan, verarbeitet **und** die Daten in einer integrierten, strukturierten Darstellung für die Subsumption bereitstellt.

Das Verfahren nutzt ein maschinelles Modell, das speziell dafür ausgelegt ist, unterschiedliche Datenformate zu verarbeiten und miteinander zu kombinieren, um eine ganzheitliche Analyse des Lebenssachverhaltes zu ermöglichen.

Ein bevorzugtes Merkmal des Verfahrens ist die multimodale Verarbeitung der Daten. Das maschinelle Lernmodell kann vorzugsweise gleichzeitig Textdaten, wie Dokumente oder E-Mails, sowie Bilddaten, wie Fotografien von Beweismitteln, analysieren. Diese Fähigkeit erlaubt es, die unterschiedlichen Aspekte eines Lebenssachverhaltes vorzugsweise in einem einzigen Verarbeitungsschritt zu berücksichtigen, anstatt die Daten separat analysieren **und** später kombinieren zu müssen. Dies führt zu einer effizienteren und kohärenteren Verarbeitung.

Ein weiteres Merkmal ist die simultane Verarbeitung der verschiedenen Datenformate. Dies bedeutet, dass Text-, Bild- **und** andere Datenarten parallel verarbeitet werden, wodurch zeitliche Verzögerungen reduziert werden. Vorzugsweise werden hierbei fortschrittliche neuronale Netzwerkarchitekturen eingesetzt, die in der Lage sind, unterschiedliche Datenströme simultan zu analysieren und Verknüpfungen zwischen den Daten herzustellen. Dies ermöglicht es, beispielsweise Textinhalte mit visuellen Informationen aus Bildern zu kombinieren **und** gemeinsam zu interpretieren.

Ein weiteres technisches Merkmal ist die integrierte, strukturierte Darstellung der verarbeiteten Daten. Das maschinelle Lernmodell erzeugt vorzugsweise aus den verschiedenen Datenquellen eine einheitliche Struktur, die für die weitere Verarbeitung, insbesondere durch das Logiknetzwerk, optimiert ist. Diese strukturierte Darstellung ermöglicht eine präzise Subsumption, da die relevanten Informationen in einer standardisierten Form bereitgestellt werden.

Das Verfahren kann erweitert werden, indem zusätzliche Datentypen, wie akustische oder sensorische Daten, integriert werden, um eine noch umfassendere Analyse zu ermöglichen. Eine weitere Optimierung könnte darin bestehen, spezialisierte neuronale Netzwerkmodule für bestimmte Datenformate zu verwenden, die dann in einem übergeordneten Modell kombiniert werden. Zudem könnte das Modell dynamisch trainiert werden, **um** sich an neue Arten von Beweismitteln anzupassen, beispielsweise durch die Nutzung von Transfer-Learning-Techniken.

Die technischen Vorteile des Verfahrens bestehen insbesondere in der Fähigkeit, komplexe Lebenssachverhalte durch die gleichzeitige Verarbeitung verschiedener Datenformate präzise zu analysieren. Die multimodale **und** simultane Verarbeitung spart Zeit **und** Ressourcen **und** erhöht die Genauigkeit der Datenanalyse. Durch die integrierte, strukturierte Darstellung werden die Daten optimal für die Subsumption aufbereitet, wodurch die Gesamtleistung des Systems verbessert wird. Dies führt zu einer höheren Effizienz und Zuverlässigkeit bei der Bewertung von Lebenssachverhalten.

Gemäß einem weiteren Aspekt wird ein Verfahren vorgeschlagen, bei dem das Logiknetzwerk auf einer Ontologie basiert, die rechtliche Begriffe, Beziehungen und/oder hierarchische Strukturen abbildet, **und** die Subsumption durch semantische Inferenzverfahren unterstützt.

Dieses Verfahren nutzt eine Ontologie, **um** komplexe rechtliche Zusammenhänge und Normstrukturen systematisch darzustellen **und** daraus logische Schlussfolgerungen zu ziehen.

Ein bevorzugtes Merkmal des Verfahrens ist die Verwendung einer Ontologie, die rechtliche Begriffe **und** deren Beziehungen abbildet. Eine Ontologie ist eine strukturierte Wissensbasis, die Begrifflichkeiten definiert und ihre Verknüpfungen zueinander beschreibt. Beispielsweise können rechtliche Begriffe wie "Vertrag", "Kündigung" oder "Schadensersatz" sowie deren hierarchische und semantische Beziehungen erfasst werden. Dies ermöglicht, dass rechtliche Normen **und** Begriffe in ihrer logischen Struktur für das Logiknetzwerk zugänglich gemacht werden.

Ein weiteres Merkmal des Verfahrens ist die Abbildung hierarchischer Strukturen in der Ontologie. Vorzugsweise werden dabei rechtliche Über- **und** Unterbegriffe sowie deren Kontext berücksichtigt, wie beispielsweise die Beziehung zwischen einem allgemeinen Prinzip **und** einer spezifischen Regel. Dies ist insbesondere bei der Subsumption von Bedeutung, da es erlaubt, komplexe Abhängigkeiten zwischen allgemeinen Normen **und** spezifischen Ausnahmen korrekt zu berücksichtigen.

Ein weiteres technisches Merkmal ist die Unterstützung der Subsumption durch semantische Inferenzverfahren. Diese Verfahren nutzen die Ontologie, um logische Schlussfolgerungen zu ziehen, die über die reine Analyse der bereitgestellten Daten hinausgehen. Beispielsweise können durch semantische Inferenz zusätzliche Informationen abgeleitet werden, wie die Identifikation relevanter Ausnahmen oder die Anwendung besonderer Vorschriften, die im Kontext des Lebenssachverhaltes wichtig sind.

Das Verfahren kann erweitert werden, indem die Ontologie regelmäßig mit neuen Begriffen, Regeln oder Normen aktualisiert wird, um sie an sich ändernde rechtliche Rahmenbedingungen anzupassen. Eine mögliche Optimierung besteht auch in der automatischen Erweiterung der Ontologie durch maschinelle Lernverfahren, die neue Zusammenhänge aus rechtlichen Texten ableiten. Zudem könnten erweiterte semantische Algorithmen eingesetzt werden, die mehrdimensionale Abhängigkeiten zwischen rechtlichen Begriffen analysieren und berücksichtigen.

Die technischen Vorteile des Verfahrens liegen insbesondere in der präzisen und systematischen Modellierung komplexer rechtlicher Zusammenhänge. Durch die Verwendung einer Ontologie wird sichergestellt, dass die Subsumption auf einer klar definierten und nachvollziehbaren Basis erfolgt. Die semantischen Inferenzverfahren erhöhen die Genauigkeit der Subsumption, da sie implizite Zusammenhänge **und** Abhängigkeiten erkennen können. Dies verbessert die Effizienz und Zuverlässigkeit des Verfahrens, insbesondere bei der Verarbeitung von Lebenssachverhalten, die komplexe rechtliche Strukturen betreffen.

Gemäß einem weiteren Aspekt wird ein Verfahren vorgeschlagen, bei dem das Logiknetzwerk dynamisch anpassbar ist und/oder neue Regeln und/oder Ontologien, insbesondere automatisch, aus geänderten rechtlichen Vorgaben und/oder Normen integriert.

Dieses Verfahren gewährleistet, dass das Logiknetzwerk flexibel auf Veränderungen in den rechtlichen Rahmenbedingungen reagieren kann, ohne dass manuelle Anpassungen erforderlich sind, **und** ohne dass das maschinelle Lernmodell zwingend neu trainiert werden muss.

Ein zentrales Merkmal des Verfahrens ist die dynamische Anpassbarkeit des Logiknetzwerks. Dies bedeutet, dass das Logiknetzwerk in der Lage ist, bestehende Regeln oder Ontologien zu modifizieren **und** neue hinzuzufügen, wenn sich rechtliche Vorgaben oder Normen ändern. Vorzugsweise erfolgt diese Anpassung durch automatisierte Prozesse, die Änderungen in relevanten Datenquellen, wie Gesetzesdatenbanken oder Urteilsportalen, identifizieren **und** die entsprechenden Informationen in das Logiknetzwerk integrieren. Dies stellt sicher, dass das Netzwerk stets auf dem neuesten Stand bleibt und aktuelle rechtliche Standards berücksichtigt.

Ein weiteres technisches Merkmal ist die automatische Integration neuer Regeln und Ontologien. Hierbei analysiert das System externe Quellen, um Änderungen oder Ergänzungen in rechtlichen Normen zu identifizieren und diese in die bestehenden Strukturen des Logiknetzwerks einzupflegen. Beispielsweise können neue gesetzliche Vorgaben automatisch durch Parsing-Algorithmen und maschinelle Lernverfahren extrahiert und in die Ontologie des Netzwerks aufgenommen werden. Dadurch wird der manuelle Aufwand zur Pflege des Netzwerks erheblich reduziert.

Ein weiteres Merkmal ist die Möglichkeit, geänderte rechtliche Vorgaben nahtlos in bestehende Subsumptionsprozesse zu integrieren. Dies wird durch eine flexible Architektur des Logiknetzwerks erreicht, die neue Regeln oder Normen sofort anwendbar macht, ohne dass bestehende Prozesse oder Ergebnisse beeinträchtigt werden. Vorzugsweise werden dabei Versionierungssysteme eingesetzt, um unterschiedliche rechtliche Stände für spezifische Anwendungsfälle verfügbar zu halten.

Das Verfahren kann erweitert werden, indem zusätzliche Datenquellen wie internationale Gesetzesdatenbanken oder branchenspezifische Regelwerke integriert werden. Eine weitere Optimierung könnte darin bestehen, dass die automatischen Updates mit einer Qualitätssicherungskomponente ergänzt werden, die die Konsistenz und Korrektheit der hinzugefügten Regeln oder Ontologien überprüft. Zudem könnte das Logiknetzwerk mit maschinellen Lernmodellen kombiniert werden, die Änderungen in rechtlichen Texten vorhersagen und somit proaktiv Anpassungen ermöglichen.

Die technischen Vorteile dieses Verfahrens bestehen insbesondere in der Flexibilität und Aktualität des Logiknetzwerks. Durch die dynamische Anpassbarkeit wird sichergestellt, dass Änderungen in rechtlichen Vorgaben unmittelbar berücksichtigt werden, was die Zuverlässigkeit der Subsumptionsprozesse erhöht. Die automatische Integration neuer Regeln reduziert den Aufwand für manuelle Aktualisierungen und minimiert das Risiko, dass veraltete Normen oder Regeln verwendet werden. Dies führt zu einer höheren Effizienz und Genauigkeit bei der Bewertung von Lebenssachverhalten und macht das System zukunftssicher gegenüber sich ständig ändernden rechtlichen Anforderungen.

Gemäß einem weiteren Aspekt wird ein Verfahren vorgeschlagen, bei dem die Interaktion zwischen dem maschinellen Lernmodell und dem Logiknetzwerk durch eine Feedback-Schleife erfolgt, die die Relevanz der vom maschinellen Lernmodell extrahierten Daten bewertet und die Verarbeitung iterativ verfeinert.

Diese Feedback-Schleife bildet eine bidirektionale Verbindung zwischen dem maschinellen Lernmodell und dem Logiknetzwerk, wodurch die extrahierten Daten kontinuierlich analysiert und optimiert werden können. Das Logiknetzwerk nutzt dabei die strukturierten Daten des maschinellen Lernmodells, bewertet deren Relevanz im Kontext der rechtlichen Normen und gibt Rückmeldungen, die das maschinelle Lernmodell dazu veranlassen, die Extraktion weiter zu verbessern.

Ein bevorzugtes Merkmal ist die Bewertung der Relevanz der extrahierten Daten. Diese erfolgt durch das Logiknetzwerk, das anhand seiner Ontologien, Regeln und/oder Inferenzalgorithmen die Bedeutung und den Zusammenhang der Informationen im Kontext der rechtlichen Vorgaben analysiert. Dadurch wird sichergestellt, dass irrelevante oder redundante Informationen erkannt und ausgeschlossen werden. Gleichzeitig können fehlende Informationen identifiziert werden, die für eine vollständige Subsumption erforderlich sind.

Ein weiteres Merkmal ist die iterative Verfeinerung der Datenverarbeitung. Das maschinelle Lernmodell passt seine Extraktionsstrategien basierend auf der Rückmeldung des Logiknetzwerks an. Dies kann beispielsweise durch eine Anpassung der Gewichtung relevanter Merkmale oder durch eine erneute Verarbeitung spezifischer Datenbereiche erfolgen. Diese Iteration verbessert kontinuierlich die Qualität der strukturierten Daten, wodurch die Genauigkeit der Subsumption steigt.

Das Verfahren kann erweitert werden, indem die Feedback-Schleife mit einem Konfidenzbewertungssystem kombiniert wird. Dieses System könnte Schwellenwerte definieren, die eine weitere Iteration der Datenverarbeitung nur dann anstoßen, wenn die Konfidenz in die Relevanz der extrahierten Daten unter einem bestimmten Niveau liegt. Eine weitere Optimierung könnte die Integration eines maschinellen Lernmodells sein, das speziell darauf trainiert ist, die Rückmeldungen des Logiknetzwerks effizient zu interpretieren und anzuwenden, wodurch die Geschwindigkeit der Iterationen erhöht wird.

Die technischen Vorteile dieses Verfahrens bestehen insbesondere in der dynamischen Anpassung und kontinuierlichen Verbesserung der Datenverarbeitung. Durch die Feedback-Schleife wird sichergestellt, dass nur relevante und präzise Daten für die Subsumption verwendet werden, was die Genauigkeit der rechtlichen Bewertungen erhöht. Zudem ermöglicht die Iteration eine flexible Anpassung an komplexe oder unvollständige Lebenssachverhalte. Dies reduziert das Risiko fehlerhafter Subsumptionen und verbessert die Effizienz des gesamten Prozesses, da unnötige Berechnungen vermieden werden.

Gemäß einem weiteren Aspekt wird ein Verfahren vorgeschlagen, bei dem das Logiknetzwerk Inferenzalgorithmen nutzt, um Abhängigkeiten und Ausnahmen innerhalb der rechtlichen Normen zu berücksichtigen, und insbesondere eine präzisere Bewertung komplexer Lebenssachverhalte ermöglicht.

Das Verfahren kombiniert die Fähigkeit, rechtliche Strukturen zu analysieren, mit fortschrittlichen Algorithmen, die komplexe logische Beziehungen zwischen Normen erkennen und auswerten können.

Ein zentrales Merkmal des Verfahrens ist die Nutzung von Inferenzalgorithmen. Diese Algorithmen sind darauf ausgelegt, logische Schlussfolgerungen basierend auf den definierten Regeln, Ontologien und bereitgestellten Daten zu ziehen. Dabei erkennen sie nicht nur direkte Zusammenhänge zwischen den Informationen, sondern auch implizite Beziehungen, wie die Anwendung spezifischer Ausnahmen oder Abhängigkeiten zwischen verschiedenen rechtlichen Vorgaben. Vorzugsweise werden Algorithmen verwendet, die sowohl vorwärtsgerichtete als auch rückwärtsgerichtete Schlussfolgerungen unterstützen, um die Relevanz der Informationen umfassend zu analysieren.

Ein weiteres technisches Merkmal ist die Berücksichtigung von Abhängigkeiten innerhalb der rechtlichen Normen. Diese Abhängigkeiten können beispielsweise in Form von Bedingungen oder Vorgaben vorliegen, die sich gegenseitig beeinflussen oder ergänzen. Das Verfahren ermöglicht es, solche Beziehungen präzise zu modellieren und in die Bewertung einzubeziehen, wodurch sichergestellt wird, dass keine wichtigen Aspekte des rechtlichen Kontextes übersehen werden.

Ein weiteres Merkmal ist die Erkennung und Behandlung von Ausnahmen innerhalb der Normen. In vielen rechtlichen Regelwerken gibt es Ausnahmeregelungen, die unter bestimmten Umständen gelten und die Subsumption erheblich beeinflussen können. Das Logiknetzwerk ist in der Lage, solche Ausnahmen zu identifizieren **und** korrekt anzuwenden, wodurch die Genauigkeit **und** Zuverlässigkeit der Bewertung erheblich gesteigert werden.

Das Verfahren kann erweitert werden, indem die Inferenzalgorithmen mit maschinellen Lernmodellen kombiniert werden, die Muster **und** Häufigkeiten in der Anwendung von Abhängigkeiten und Ausnahmen erkennen können. Eine weitere Optimierung könnte die Integration von Unsicherheitsmodellen sein, die bei unvollständigen oder widersprüchlichen Daten probabilistische Entscheidungen ermöglichen. Zudem könnten zusätzliche rechtliche Datenquellen genutzt werden, um eine breitere Basis für die Erkennung von Abhängigkeiten und Ausnahmen zu schaffen.

Die technischen Vorteile dieses Verfahrens liegen insbesondere in der Fähigkeit, komplexe rechtliche Strukturen **und** deren Wechselwirkungen präzise zu analysieren **und zu** bewerten. Die Nutzung von Inferenzalgorithmen gewährleistet, dass selbst komplizierte Ausnahmen und Abhängigkeiten korrekt berücksichtigt werden, wodurch die Subsumptionsergebnisse genauer **und** verlässlicher werden. Darüber hinaus wird die Effizienz des Verfahrens gesteigert, da viele der sonst manuell zu prüfenden logischen Zusammenhänge automatisch erkannt **und** verarbeitet werden. Dies macht das Verfahren insbesondere bei der Analyse komplexer Lebenssachverhalte äußerst effektiv.

Gemäß einem weiteren Aspekt wird ein Verfahren vorgeschlagen, bei dem das Subsumptionsergebnis eine strukturierte Bewertung in Form einer logischen Erklärung ausgibt, die die Ableitungsschritte zwischen den extrahierten Informationen **und** den rechtlichen Normen nachvollziehbar darstellt.

Das Verfahren stellt sicher, dass die Ergebnisse der Subsumption transparent **und** verständlich dokumentiert werden, sodass Anwender die Bewertungsschritte im Detail nachvollziehen können.

Ein bevorzugtes Merkmal des Verfahrens ist die strukturierte Ausgabe des Subsumptionsergebnisses. Dabei werden die Ergebnisse in einer standardisierten Form bereitgestellt, die klare Verknüpfungen zwischen den analysierten Daten, den angewendeten Normen **und** den daraus resultierenden Schlussfolgerungen aufzeigt. Vorzugsweise wird hierfür ein formatierter Bericht erzeugt, der alle relevanten Details der Subsumption enthält, wie die identifizierten rechtlichen Normen, die angewendeten Ausnahmen **und** die logischen Schritte, die zur Entscheidung geführt haben.

Ein weiteres technisches Merkmal ist die logische Erklärung der Bewertungsergebnisse. Das Verfahren dokumentiert die Ableitungsschritte, die während des Subsumptionsprozesses durch das Logiknetzwerk durchgeführt wurden. Dies umfasst beispielsweise die Anwendung spezifischer Regeln oder Inferenzalgorithmen sowie die Berücksichtigung von Abhängigkeiten und Ausnahmen. Dadurch wird sichergestellt, dass jede Entscheidung durch eine nachvollziehbare und prüfbare Begründung gestützt ist.

Ein weiteres Merkmal ist die Nachvollziehbarkeit der Verknüpfung zwischen den extrahierten Informationen und den rechtlichen Normen. Das Verfahren stellt klar dar, wie die Daten des Lebenssachverhalts in Bezug zu den geltenden Normen gesetzt wurden **und** welche logischen Schritte dabei berücksichtigt wurden. Dies ermöglicht es, die Relevanz **und** Validität der Bewertungsergebnisse zu überprüfen und bei Bedarf Anpassungen vorzunehmen.

Das Verfahren kann erweitert werden, indem die strukturierte Ausgabe mit visuellen Elementen, wie Diagrammen oder Flussdiagrammen, ergänzt wird, um komplexe logische Zusammenhänge leichter verständlich darzustellen. Eine weitere Optimierung könnte die Integration einer interaktiven Benutzeroberfläche sein, die es ermöglicht, spezifische Ableitungsschritte detailliert zu untersuchen oder alternative Szenarien zu simulieren. Zudem könnten Qualitätskontrollen in das Verfahren integriert werden, um die Konsistenz **und** Genauigkeit der logischen Erklärungen zu überprüfen.

Die technischen Vorteile dieses Verfahrens liegen insbesondere in der Transparenz **und** Nachvollziehbarkeit der Subsumptionsergebnisse. Die strukturierte und logische Dokumentation stellt sicher, dass die Ergebnisse auch in rechtlich sensiblen oder komplexen Kontexten überprüfbar und vertrauenswürdig sind. Darüber hinaus erhöht die detaillierte Erklärung die Akzeptanz der automatisierten Subsumption, da Anwender die Entscheidungsprozesse vollständig nachvollziehen können. Dies verbessert nicht nur die Qualität der Bewertung, sondern schafft auch eine Grundlage für eine effiziente Kommunikation **und** Überprüfung der Ergebnisse.

Gemäß einem weiteren Aspekt wird ein Verfahren vorgeschlagen, bei dem das Logiknetzwerk ein programmierbares Logikarray und/oder einen Zustandsautomaten umfasst, wobei der Zustandsautomat vorzugsweise als Mealy- oder Moore-Struktur ausgebildet ist, um logische Schlussfolgerungen durch schrittweise Zustandsübergänge basierend auf den extrahierten Informationen und den rechtlichen Normen auszuführen. Dieses Verfahren nutzt spezielle hardware- oder softwarebasierte Strukturen, um logische Operationen effizient und nachvollziehbar durchzuführen.

Ein zentrales Merkmal des Verfahrens ist die Verwendung eines programmierbaren Logikarrays im Logiknetzwerk. Dieses Array ermöglicht die flexible Definition und Umsetzung von logischen Regeln und Bedingungen, die auf die extrahierten Informationen angewendet werden. Ein programmierbares Logikarray bietet dabei den Vorteil, dass es dynamisch an unterschiedliche Anforderungen angepasst werden kann, beispielsweise durch die Aktualisierung der Regelbasis bei geänderten rechtlichen Vorgaben. Dies macht das System flexibel und zukunftssicher.

Ein weiteres technisches Merkmal ist die Integration eines Zustandsautomaten. Zustandsautomaten arbeiten auf der Basis definierter Zustände und führen logische Operationen durch Zustandsübergänge aus. Vorzugsweise wird entweder eine Mealy- oder eine Moore-Struktur verwendet. Bei einem Mealy-Automaten hängt die Ausgabe von den Zuständen und den Eingaben ab, während bei einem Moore-Automaten die Ausgabe ausschließlich von den Zuständen abhängt. Diese Strukturen ermöglichen es, komplexe logische Prozesse effizient zu modellieren und auszuführen, beispielsweise die schrittweise Anwendung von Normen und Ausnahmen in Abhängigkeit vom Lebenssachverhalt.

Ein weiteres Merkmal des Verfahrens ist die Fähigkeit des Logiknetzwerks, schrittweise Zustandsübergänge basierend auf den extrahierten Informationen und rechtlichen Normen auszuführen. Dadurch kann das Netzwerk logische Prozesse in einer klar definierten Reihenfolge abarbeiten, was insbesondere bei komplexen Subsumptionsaufgaben von Vorteil ist. Diese Struktur gewährleistet, dass die Verarbeitung jederzeit nachvollziehbar und prüfbar bleibt.

Das Verfahren kann erweitert werden, indem Zustandsautomaten mit adaptiven Elementen ausgestattet werden, die es ermöglichen, neue Zustände oder Übergänge automatisch hinzuzufügen, basierend auf Änderungen in den rechtlichen Vorgaben. Eine weitere Optimierung könnte die Kombination von programmierbaren Logikarrays mit maschinellen Lernmodellen sein, um die Regelbasis durch Datenanalyse dynamisch zu erweitern. Zudem könnten hybride Strukturen entwickelt werden, die die Vorteile von Mealy- und Moore-Automaten kombinieren, um die Flexibilität und Effizienz des Verfahrens zu erhöhen.

Die technischen Vorteile dieses Verfahrens bestehen insbesondere in der Effizienz **und** Präzision der logischen Schlussfolgerungen. Durch die Verwendung von programmierbaren Logikarrays kann das System flexibel auf unterschiedliche Anforderungen reagieren, während Zustandsautomaten eine strukturierte und nachvollziehbare Verarbeitung ermöglichen. Die schrittweisen Zustandsübergänge reduzieren das Risiko von Fehlern und ermöglichen eine klare Dokumentation der Subsumptionsprozesse. Darüber hinaus verbessein diese Strukturen die Verarbeitungsgeschwindigkeit und Zuverlässigkeit, insbesondere bei komplexen oder datenintensiven Anwendungen. Dies macht das Verfahren besonders geeignet für automatisierte rechtliche Bewertungen, bei denen Präzision und Nachvollziehbarkeit von entscheidender Bedeutung sind.

Ein programmierbares Logikarray (Programmable Logic Array, PLA) **und** ein Zustandsautomat (Finite State Machine, FSM) sind vorzugsweise Komponenten in digitalen Schaltungen **und** Computersystemen. Ein programmierbares Logikarray (PLA) ist vorzugsweise eine Art digitaler Logikschaltung, die so konfiguriert werden kann, dass sie verschiedene logische Funktionen ausführt. Ein PLA umfasst vorzugsweise eine Matrix von programmierbaren AND- **und** OR-Gattern. Die Hauptmerkmale eines PLA sind dabei AND-Ebene, die vorzugsweise eine Reihe von AND-Gattern aufweisen. Jeder Eingang kann entweder direkt oder negiert (invertiert) in die AND-Gatter eingespeist werden. Diese Ebene ermöglicht die Erzeugung von Produkttermen, die Kombinationen der Eingangsvariablen darstellen. Ferner umfassen PLAs vorzugsweise mindestens eine OR-Ebene. Die Ausgänge der AND-Ebene werden dabei vorzugsweise als Eingänge in eine Reihe von OR-Gattern eingespeist. Diese Ebene kombiniert die Produktterme, um die endgültigen logischen Ausdrücke zu bilden. Sowohl die AND- als auch die OR-Ebene sind vorzugsweise programmierbar, was bedeutet, dass sie so konfiguriert werden können, dass sie spezifische logische Funktionen ausführen, und so beispielsweise ein komplexes Prüfungsschema widerspiegeln können. Dies erfolgt vorzugsweise durch das Setzen oder Löschen von Verbindungen in der Matrix.

Ein Zustandsautomat (Finite State Machine, FSM) ist ein Modell der Berechnung, das aus einer endlichen Anzahl von Zuständen besteht, zwischen denen basierend auf Eingaben **und** Übergangsbedingungen gewechselt werden kann. Ein FSM kann in zwei Haupttypen unterteilt werden: Mealy- und Moore-Automaten. Ein Mealy-Automat ist ein FSM, bei dem die Ausgaben von den Eingängen und dem aktuellen Zustand abhängen.

Ein Mealy-Automat hat vorzugsweise eine endliche Anzahl von Zuständen, in denen sich der Automat befinden kann. Ein Mealy-Automat hat vorzugsweise Regeln, die bestimmen, wie der Automat von einem Zustand in einen anderen wechselt, basierend auf den Eingaben. Ein Mealy-Automat hat vorzugsweise Variablen oder Signale, die den Zustand des Automaten beeinflussen. In einem Mealy-Automaten werden Ausgaben vorzugsweise sowohl als Funktion des aktuellen Zustands als auch der Eingaben berechnet.

Ein Moore-Automat ist ein FSM, bei dem die Ausgaben nur vom aktuellen Zustand abhängen. Ein Moore-Automat hat vorzugsweise eine endliche Anzahl von Zuständen, in denen sich der Automat befinden kann. Ein Moore-Automat hat vorzugsweise Regeln, die bestimmen, wie der Automat von einem Zustand in einen anderen wechselt, basierend auf den Eingaben. Ein Moore-Automat hat vorzugsweise Variablen oder Signale, die den Zustand des Automaten beeinflussen. In einem Moore-Automaten werden Ausgaben vorzugsweise ausschließlich als Funktion des aktuellen Zustands berechnet.

In einer digitalen Schaltung können PLAs und FSMs kombiniert werden, um komplexe Steuerlogiken zu implementieren. Ein PLA kann verwendet werden, um die logischen Ausdrücke zu erzeugen, die die Zustandsübergänge und Ausgaben eines FSM steuern. Dies ermöglicht eine flexible und programmierbare Lösung für die Implementierung von Steuerungsalgorithmen und anderen logischen Funktionen.

In einem weiteren Aspekt wird ein Computerprogrammprodukt vorgeschlagen, umfassend Befehle, die bei der Ausführung des Programms durch einen Computer diesen veranlassen, die Schritte des vorliegenden Verfahrens in einem seiner Aspekte auszuführen.

Das Computerprogrammprodukt umfasst vorzugsweise eine Sammlung von Anweisungen, die in einer oder mehreren Programmiersprachen geschrieben sind und die vorzugsweise darauf ausgelegt sind, die im Verfahren beschriebenen Aufgaben und/oder Funktionen zu erfüllen, wenn sie von einem Computer ausgeführt werden. Die Anweisungen im Programm sind vorzugsweise so gestaltet, dass sie den Computer veranlassen, die verschiedenen Schritte und Abläufe des Verfahrens gemäß den angegebenen Aspekten zu durchlaufen und durchzuführen.

In einem weiteren Aspekt wird ein computerlesbarer Datenträger vorgeschlagen, auf dem ein solches Computerprogrammprodukt gespeichert ist.

Dieser computerlesbare Datenträger kann verschiedene physische Medien umfassen, wie CDs, DVDs, USB-Sticks, Festplatten oder SSDs, die von Computern oder ähnlichen elektronischen Geräten gelesen werden können. Das auf dem Datenträger gespeicherte Computerprogrammprodukt umfasst vorzugsweise eine Sammlung von Anweisungen oder Code, die von einem Computer ausgeführt werden können, um spezifische Funktionen oder Aufgaben zu erfüllen. Das Programm kann in verschiedenen Programmiersprachen geschrieben sein und unterschiedliche Komponenten wie ausführbare Dateien, Bibliotheken, Konfigurationsdateien und Dokumentationen enthalten. Der Datenträger ermöglicht es vorzugsweise dem Computer, das darauf gespeicherte Programm zu lesen und auszuführen, um die vorgesehenen Funktionen zu realisieren.

Das vorliegende Verfahren kann verschiedene Arten von maschinellen Lernmodellen einsetzen. Vorzugsweise werden Transformer-basierte Modelle, wie BERT, GPT oder andere große Sprachmodelle (LLMs), verwendet, die auf die Analyse und Verarbeitung von Textdaten spezialisiert sind. Für die Verarbeitung multimodaler Daten können auch Modelle wie CLIP oder Vision-Transformer (ViT) zum Einsatz kommen, die sowohl Textals auch Bilddaten analysieren können. Alternativ können Convolutional Neural Networks (CNNs) für die Bildverarbeitung oder Recurrent Neural Networks (RNNs) für zeitliche Daten verwendet werden, abhängig von den Anforderungen der Eingabedaten.

Das Logiknetzwerk kann in verschiedenen Formen vorliegen, vorzugsweise als regelbasiertes System, Ontologie und/oder als zustandsbasierte Logik wie ein Mealy- oder Moore-Automat. Darüber hinaus können Inferenzsysteme eingesetzt werden, die mit Wissensgraphen oder semantischen Modellen arbeiten. Für eine besonders effiziente Verarbeitung kann das Logiknetzwerk als programmierbares Logikarray oder in hardwarebasierten Lösungen, wie Field-Programmable Gate Arrays (FPGAs), implementiert werden.

Die Verknüpfung zwischen dem maschinellen Lernmodell und dem Logiknetzwerk erfolgt auf Software- und/oder Hardwareebene. Auf Softwareebene können die Modelle über APIs oder spezialisierte Middleware integriert werden, die eine reibungslose Kommunikation zwischen den Modulen gewährleistet. Auf Hardwareebene kann die Verknüpfung durch Shared Memory oder spezialisierte Prozessoren, die sowohl maschinelle Lernmodelle als auch Logiknetzwerke unterstützen, realisiert werden. Vorzugsweise wird ein Framework verwendet, das eine nahtlose Integration erlaubt, wie TensorFlow, PyTorch oder dedizierte Hardwarebeschleuniger.

Die Interaktion zwischen dem maschinellen Lernmodell und dem Logiknetzwerk erfolgt in mehreren Schritten. Zunächst verarbeitet das maschinelle Lernmodell die Eingabedaten **und** extrahiert relevante Informationen. Diese strukturierten Daten werden anschließend an das Logiknetzwerk übergeben, das auf Basis der definierten Regeln, Ontologien oder Zustandsautomaten logische Schlussfolgerungen zieht. Das Logiknetzwerk kann wiederum Feedback an das maschinelle Lernmodell geben, **um** die Datenverarbeitung iterativ zu verfeinern. Mindestens eine Ausgabe des Logiknetzwerkes wird vorzugsweise als Eingabe an den Eingang oder an eine Zwischenstufe des maschinellen Lernmodells rückgekoppelt. Vorzugsweise erfolgt diese Interaktion in einer bidirektionalen Feedback-Schleife. Beispielsweise wird zumindest eine Ausgabe des Logiknetzwerkes als Eingabe an den Eingang oder an eine Zwischenstufe des maschinellen Lernmodells **und** zumindest eine Ausgabe des maschinellen Lernmodells als Eingabe an den Eingang oder an eine Zwischenstufe des Logiknetzwerkes übergeben. Die Ausgaben können vor der Rücckopplung zeitlich, beispielsweise mindestens einen Berechnungszyklus, verzögert werden. Ferner können Daten, die von dem Logiknetzwerk an das maschinelle Lernmodell oder dem maschinellen Lernmodell an das Logiknetzwerk übergeben werden, ein Embedding oder dessen Invertierung, beispielsweise als Abbildung zwischen Zahlen **und** einem nichtnumerischen System, beispielsweise linguistischen Elementen oder Kategorien unter anderem gemäß einer Embedding-Tabelle oder als mathematische Abbildung erfolgen.

Eine oder mehrere Ausgaben des maschinellen Lernmodells und/oder des Logiknetzwerkes können unmittelbar oder indirekt nach weiteren Verarbeitungsschritten Ausgaben des Verfahrens bilden.

Die Dateneingaben bestehen beispielsweise aus multimodalen Informationen, wie Texten, Bildern oder natürlichen Beweismitteln. Die Ausgaben umfassen strukturierte Bewertungen, logische Schlussfolgerungen und Subsumptionsergebnisse, die in Form von Berichten oder maschinenlesbaren Daten bereitgestellt werden. Zusätzlich können Konfidenzbewertungen oder Unsicherheitsanalysen als Teil der Ausgaben integriert sein.

Für das Training des maschinellen Lernmodells mitsamt dem Logiknetzwerk sind Trainingsdaten bevorzugt, die gelabelte Lebenssachverhalte, zugehörige rechtliche Normen **und** korrekte Subsumptionsergebnisse umfassen. Diese Daten können aus rechtlichen Datenbanken, Gerichtsurteilen, Regelwerken und/oder simulierten Szenarien generiert werden. Das Training erfolgt vorzugsweise in zwei Phasen: Zuerst wird vorzugsweise das maschinelle Lernmodell auf die Extraktion relevanter Daten trainiert, anschließend wird das Logiknetzwerk mit den Regeln **und** Ontologien trainiert, die für die logischen Schlussfolgerungen notwendig sind. Die Trainingsreihenfolge kann ferner umgekehrt sein. Gemeinsames Training, bei dem beide Module iterativ verbessert werden, ist ebenfalls möglich. Ferner kann das Logiknetzwerk auch fertig bereitgestellt **und** nur das maschinelle Lernmodell trainiert werden.

Die Trainingsmethoden umfassen vorzugsweise überwachte Lernverfahren, bei denen die Modelle anhand gelabelter Datensätze optimiert werden, sowie Transfer-Learning, um vortrainierte Modelle für spezifische Anwendungen anzupassen. Für das Logiknetzwerk können regelbasierte Ansätze mit manuell definierten Regeln oder reinforcement learning für die Optimierung der Zustandsautomaten eingesetzt werden.

Eine Online-Optimierung kann erfolgen, indem das System kontinuierlich neue Daten aus realen Anwendungen integriert. Vorzugsweise wird ein Feedback-Mechanismus genutzt, der die Ergebnisse des Systems mit tatsächlichen Bewertungen vergleicht **und** die Modelle iterativ anpasst. Zusätzlich können aktive Lernansätze implementiert werden, bei denen das System gezielt nach neuen Trainingsdaten fragt, um Wissenslücken zu schließen.

Die Ausgabe des Bewertungsergebnisses kann in verschiedenen Formen erfolgen, abhängig von der spezifischen Anwendung **und** den Anforderungen des Verfahrens. Sie kann beispielsweise als strukturierter Bericht bereitgestellt werden, der die Ergebnisse der Subsumption darstellt. Der Bericht könnte die zugeordneten rechtlichen Normen, die relevanten Ausnahmen **und** Abhängigkeiten sowie eine Zusammenfassung der logischen Schlussfolgerungen enthalten. Alternativ kann die Ausgabe in maschinenlesbarer Form erfolgen, etwa in Form von JSON-, XML- oder anderen Datenformaten, die für die Integration in nachgelagerte Systeme oder Prozesse geeignet sind. Zudem kann die Ausgabe visuelle Elemente wie Diagramme oder Entscheidungsbäume enthalten, um komplexe logische Zusammenhänge besser verständlich darzustellen. Für interaktive Anwendungen kann die Ausgabe über eine Benutzeroberfläche erfolgen, die es ermöglicht, spezifische Details der Bewertung einzusehen oder alternative Szenarien zu simulieren.

Reasoning kann zur weiteren Optimierung des Verfahrens eingesetzt werden, indem es die logischen Schlussfolgerungen während des Subsumptionsprozesses nachvollziehbar und konsistent macht. Dies könnte durch die Integration von Inferenzalgorithmen erfolgen, die sicherstellen, dass alle relevanten rechtlichen Normen und deren Abhängigkeiten vollständig berücksichtigt werden. Darüber hinaus kann das Reasoning genutzt werden, um bei Unsicherheiten alternative Bewertungswege zu simulieren und deren Ergebnisse zu vergleichen, was die Robustheit und Zuverlässigkeit des Verfahrens erhöht.

Ein Confidence Scoring kann zur Bewertung der Sicherheit und Zuverlässigkeit der Subsumptionsergebnisse eingesetzt werden. Hierbei wird für jede logische Schlussfolgerung ein Konfidenzwert berechnet, der die Wahrscheinlichkeit angibt, mit der die Schlussfolgerung korrekt ist. Solche Werte können auf der Grundlage von Unsicherheiten in den Eingabedaten, der Qualität der extrahierten Informationen oder der Komplexität der rechtlichen Normen berechnet werden. Ein niedriger Konfidenzwert kann das System dazu veranlassen, zusätzliche Datenquellen zu analysieren oder alternative Schlussfolgerungen zu prüfen. Darüber hinaus kann das Confidence Scoring dazu verwendet werden, die Ergebnisse zu priorisieren, indem zuerst die zuverlässigsten Subsumptionen dargestellt werden.

Das Verfahren kann weiter optimiert werden, indem Reasoning und Confidence Scoring kombiniert werden, um dynamisch zu entscheiden, wann weitere Iterationen der Datenanalyse oder zusätzliche Verarbeitungen erforderlich sind. Eine weitere Optimierung könnte darin bestehen, die Konfidenzwerte in die Ausgabe zu integrieren, sodass Anwender die Unsicherheiten und Risiken der Ergebnisse besser bewerten können. Dies erhöht nicht nur die Transparenz, sondern auch die Möglichkeit, gezielte Maßnahmen auf Basis der Ergebnisse zu ergreifen. Insgesamt führen diese Ansätze zu einer höheren Präzision, Zuverlässigkeit und Anpassungsfähigkeit des Verfahrens.

Ein konkretes Anwendungsbeispiel ist die automatisierte Bewertung von Versicherungsfällen. Das maschinelle Lernmodell analysiert eingereichte Unterlagen wie Schadensberichte, Fotos und/oder Vertragsdokumente. Das Logiknetzwerk prüft, ob der Schaden unter die Versicherungsbedingungen fällt, unter Berücksichtigung von Ausnahmen oder spezifischen Klauseln. Die Ausgabe umfasst eine strukturierte Bewertung, ob der Fall reguliert werden kann, und bietet optional Empfehlungen für Nachbesserungen, wenn Informationen fehlen. Dieses Verfahren reduziert Bearbeitungszeiten und gewährleistet eine konsistente und rechtlich fundierte Bewertung.

Die beschriebenen Aspekte und deren Weiterbildungen lassen sich beliebig miteinander kombinieren.

Weitere mögliche Ausgestaltungen, Weiterbildungen, Aspekte und/oder Implementierungen der Erfindung weisen auch nicht explizit genannte Kombinationen von den zuvor genannten oder nachstehend noch zu erläuternden Merkmalen auf. Eine, ein wird vorliegend als "mindestens eine" bzw. "mindestens ein" verstanden.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.
- Fig. 1: zeigt ein schematisches Flussdiagramm eines Ausführungsbeispiels des vorliegenden Verfahrens.
- Fig. 2: zeigt eine schematische Ansicht eines beispielhaften Aufbaus eines um ein Logiknetzwerk erweiterten, maschinellen Lernmodells, insbesondere eines Sprachmodells.

### Detaillierte Beschreibung der Zeichnungen

In den Figuren der Zeichnungen bezeichnen gleiche Bezugszeichen gleiche oder funktionsgleiche Elemente, Bauteile oder Komponenten, soweit nichts Gegenteiliges angegeben ist.

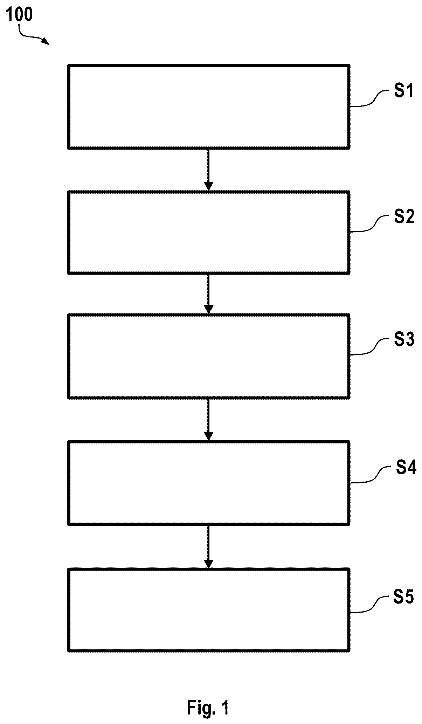

Fig. 1 zeigt ein schematisches Flussdiagramm eines Verfahrens zum Erzeugen eines logikbasierten Bewertungsergebnisses zu einer automatisierten Subsumption eines Lebenssachverhaltes, insbesondere unter geltenden rechtlichen Normen.

Das Verfahren kann in einer beliebigen Ausführungsform zumindest teilweise durch eine Vorrichtung 100 ausgeführt werden, die hierzu mehrere nicht näher dargestellte Komponenten, beispielsweise eine oder mehrere Bereitstellungseinrichtungen und/oder mindestens eine Auswerte- und Recheneinrichtung umfassen kann. Es versteht sich, dass die Bereitstellungseinrichtung gemeinsam mit der Auswerte- und Recheneinrichtung ausgebildet sein kann, oder von dieser unterschiedlich sein kann. Ferner kann die Vorrichtung 100, die ein Teil eines Systems sein kann, eine Speichereinrichtung und/oder eine Ausgabeeinrichtung und/oder eine Anzeigeeinrichtung und/oder eine Eingabeeinrichtung umfassen.

Das computerimplementierte Verfahren umfasst mindestens die folgenden Schritte:
In einem Schritt S1 erfolgt ein Bereitstellen von Daten, die den Lebenssachverhalt dokumentieren. Diese Daten können Text-, Bild-, Natural- und/oder sonstige Beweismittel umfassen, die in die Vorrichtung 100 eingespeist werden, beispielsweise über eine Eingabeeinrichtung oder eine Schnittstelle zu externen Datenquellen.

In einem Schritt S2 erfolgt eine Verarbeitung der bereitgestellten Daten mittels eines maschinellen Lernmodells. Dieses Modell extrahiert relevante Informationen aus den Daten und stellt sie in einer strukturierten Form dar. Die Ausführung dieses Schrittes kann in der Auswerte- und Recheneinrichtung erfolgen, die mit der Speichereinrichtung zur Zwischenspeicherung der extrahierten Informationen verbunden ist.

In einem Schritt S3 erfolgt ein Abgleich der strukturierten Informationen mit rechtlichen Normen und/oder Vorgaben durch ein Logiknetzwerk. Das Logiknetzwerk führt logische Schlussfolgerungen basierend auf den extrahierten Informationen und den rechtlichen Vorgaben aus. Die Speichereinrichtung kann hierbei als Zwischenspeicher für die Ergebnisse des maschinellen Lernmodells und des Logiknetzwerks dienen.

In einem Schritt S4 erfolgt eine Bewertung des Lebenssachverhaltes durch eine Subsumption der extrahierten Informationen unter die geltenden rechtlichen Normen. Die Ergebnisse des Logiknetzwerks werden zur Erzeugung eines Bewertungsergebnisses verwendet, das eine Zuordnung des Lebenssachverhaltes zu den rechtlichen Normen umfasst.

In einem Schritt S5 erfolgt eine Ausgabe des Bewertungsergebnisses, beispielsweise über eine Anzeigeeinrichtung oder eine externe Schnittstelle. Optional können Hinweise zu relevanten rechtlichen Änderungen oder Unsicherheiten bereitgestellt werden. Die Ausgabeeinrichtung kann hierbei auch Berichte generieren, die die Ergebnisse und die zugrunde liegenden logischen Schlussfolgerungen detailliert darstellen.

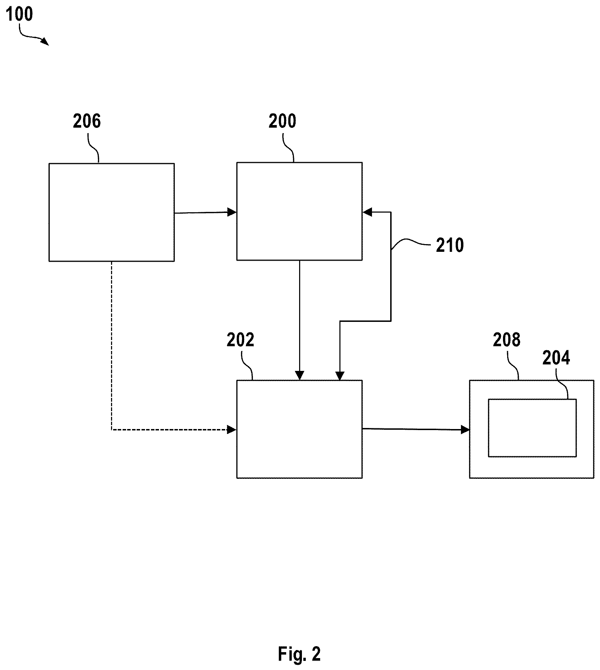

Fig. 2 zeigt eine schematische Darstellung eines Aufbaus eines maschinellen Lemmodells 200, das um ein Logiknetzwerk 202 erweitert ist, zum Erzeugen eines logikbasierten Bewertungsergebnisses 204.

Dabei ist ein Eingabeblock 206 vorgesehen, der Daten bereitstellt, die den Lebenssachverhalt dokumentieren. Diese Daten können beispielsweise Text-, Bild-, Natural- und/oder sonstige Beweismittel umfassen.

Die bereitgestellten Daten werden an das maschinelle Lernmodell 200 weitergeleitet. Das maschinelle Lernmodell ist dazu ausgebildet, relevante Informationen aus den Eingabedaten zu extrahieren und diese in einer strukturierten Form darzustellen. Es ist auch möglich, dass das Logiknetzwerk 202 direkt auf die Daten aus dem Eingabeblock 206 zugreift.

Die strukturierten Daten werden an das Logiknetzwerk 202 übergeben, das auf Basis der extrahierten Informationen und geltender rechtlicher Normen logische Schlussfolgerungen zieht. Das Logiknetzwerk 202 kann beispielsweise ein regelbasiertes System, eine Ontologie oder einen Zustandsautomaten umfassen. Das Logiknetzwerk 202 verarbeitet die Daten weiter und berücksichtigt dabei beispielsweise Abhängigkeiten und Ausnahmen innerhalb der rechtlichen Normen.

Die Ergebnisse der Verarbeitung durch das Logiknetzwerk 202 werden schließlich in einem Ausgabeblock 208 dargestellt. Die Ausgabe kann eine strukturierte Bewertung in Form eines Berichts oder maschinenlesbarer Datenformate umfassen und gegebenenfalls eine logische Erklärung enthalten, die die Ableitungsschritte nachvollziehbar macht.

Die Interaktion zwischen dem maschinellen Lernmodell 200 und dem Logiknetzwerk 202 erfolgt vorzugsweise in einer bidirektionalen Feedback-Schleife 210. Diese Schleife 210 ermöglicht es, die Relevanz der extrahierten Informationen zu bewerten und die Verarbeitung iterativ zu verfeinern.

### Bezugszeichenliste

- 100: Vorrichtung
- 200: Maschinelles Lernmodell
- 202: Logiknetzwerk
- 204: Bewertungsergebnis
- 206: Eingabeblock
- 208: Ausgabeblock
- 210: Feedback-Schleife
- S1: Schritt des Bereitstellens von Daten
- S2: Schritt der Verarbeitung der Daten mittels des maschinellen Lernmodells
- S3: Schritt des Abgleichs der Daten mit Normen durch das Logiknetzwerk
- S4: Schritt der Bewertung des Lebenssachverhalts durch Subsumption
- S5: Schritt der Ausgabe des Bewertungsergebnisses

## Patentansprüche

1. Verfahren zum Erzeugen eines logikbasierten Bewertungsergebnisses zu einer automatisierten Subsumption eines Lebenssachverhaltes, insbesondere unter geltenden rechtlichen Normen, umfassend die Schritte:
- Bereitstellen (S1) von Daten, die den Lebenssachverhalt dokumentieren, wobei die Daten mindestens Text-, Bild-, Natural- und/oder sonstige Beweismittel umfassen;
- Verarbeitung (S2) der bereitgestellten Daten mittels eines maschinellen Lernmodells (200), um relevante Informationen aus den Daten zu extrahieren und diese in einer strukturierten Form darzustellen;
- Abgleich (S3) der strukturierten Informationen mit rechtlichen Normen und/oder Vorgaben durch ein Logiknetzwerk (202), das logische Schlussfolgerungen basierend auf den extrahierten Informationen und den rechtlichen Vorgaben zieht;
- Bewertung (S4) des Lebenssachverhaltes durch eine Subsumption der extrahierten Informationen unter die geltenden rechtlichen Normen auf Grundlage zumindest der Ergebnisse des Logiknetzwerks (202); und
- Ausgabe (S5) eines Bewertungsergebnisses, das eine Zuordnung des Lebenssachverhaltes zu den rechtlichen Normen umfasst.

2. Verfahren nach Anspruch 1, wobei das maschinelle Lernmodell (200) ein multimodales Modell aufweist, das Text-, Bild- und/oder weitere Beweismittel, insbesondere simultan, verarbeitet, und die Daten in einer integrierten, strukturierten Darstellung für die Subsumption bereitstellt.

3. Verfahren nach Anspruch 1 oder 2, wobei das Logiknetzwerk (202) auf einer Ontologie basiert, die rechtliche Begriffe, Beziehungen und/oder hierarchische Strukturen abbildet, und die Subsumption durch semantische Inferenzverfahren unterstützt.

4. Verfahren nach einem der vorhergehenden Ansprüche, wobei das Logiknetzwerk (202) dynamisch anpassbar ist und/oder neue Regeln und/oder Ontologien, insbesondere automatisch, aus geänderten rechtlichen Vorgaben und/oder Normen integriert.

5. Verfahren nach einem der vorhergehenden Ansprüche, wobei die Interaktion zwischen dem maschinellen Lernmodell (200) und dem Logiknetzwerk (202) durch eine Feedback-Schleife (210) erfolgt, die die Relevanz der vom maschinellen Lernmodell (200) extrahierten Daten bewertet und die Verarbeitung iterativ verfeinert.

6. Verfahren nach einem der vorhergehenden Ansprüche, wobei das Logiknetzwerk (202) Inferenzalgorithmen nutzt, um Abhängigkeiten und Ausnahmen innerhalb der rechtlichen Normen zu berücksichtigen, und insbesondere eine präzisere Bewertung komplexer Lebenssachverhalte ermöglicht.

7. Verfahren nach einem der vorhergehenden Ansprüche, wobei das Subsumptionsergebnis eine strukturierte Bewertung in Form einer logischen Erklärung ausgibt, die die Ableitungsschritte zwischen den extrahierten Informationen und den rechtlichen Normen nachvollziehbar darstellt.

8. Verfahren nach einem der vorhergehenden Ansprüche, wobei das Logiknetzwerk (202) ein programmierbares Logikarray und/oder einen Zustandsautomaten umfasst, wobei der Zustandsautomat vorzugsweise als Mealy- oder Moore-Struktur ausgebildet ist, um logische Schlussfolgerungen durch schrittweise Zustandsübergänge basierend auf den extrahierten Informationen und den rechtlichen Normen auszuführen.

9. Computerprogrammprodukt, umfassend Befehle, die bei der Ausführung des Programms durch einen Computer diesen veranlassen, die Schritte des Verfahrens nach einem der Ansprüche 1 bis 8 auszuführen.

10. Vorrichtung (100) zum Erzeugen eines logikbasierten Bewertungsergebnisses zu einer automatisierten Subsumption eines Lebenssachverhaltes, insbesondere unter geltenden rechtlichen Normen, wobei die Vorrichtung (100) eine Auswerte- und Recheneinrichtung aufweist, die dazu ausgebildet ist, die folgenden Schritte auszuführen:
- Bereitstellen von Daten, die den Lebenssachverhalt dokumentieren, wobei die Daten mindestens Text-, Bild-, Natural- und/oder sonstige Beweismittel umfassen;
- Verarbeitung der bereitgestellten Daten mittels eines maschinellen Lernmodells (200), um relevante Informationen aus den Daten zu extrahieren und diese in einer strukturierten Form darzustellen;
- Abgleich der strukturierten Informationen mit rechtlichen Normen und/oder Vorgaben durch ein Logiknetzwerk (202), das logische Schlussfolgerungen basierend auf den extrahierten Informationen und den rechtlichen Vorgaben zieht;
- Bewertung des Lebenssachverhaltes durch eine Subsumption der extrahierten Informationen unter die geltenden rechtlichen Normen auf Grundlage der Ergebnisse des Logiknetzwerks (202); und
- Ausgabe eines Bewertungsergebnisses, das eine Zuordnung des Lebenssachverhaltes zu den rechtlichen Normen umfasst.

## Geänderte Patentansprüche

### Geänderte Patentansprüche gemäss Regel 137(2) EPÜ.

1. Verfahren zum Erzeugen eines logikbasierten Bewertungsergebnisses zu einer automatisierten Subsumption eines Lebenssachverhaltes, umfassend die Schritte:
- Bereitstellen (S1) von Textdaten, die den Lebenssachverhalt dokumentieren;
- Verarbeitung (S2) der bereitgestellten Textdaten mittels eines maschinellen Lemmodells (200), um relevante Informationen aus den Textdaten zu extrahieren und in strukturierter Form darzustellen;
- Abgleich (S3) der strukturierten Informationen mit rechtlichen Normen und/oder Vorgaben durch ein Logiknetzwerk (202), das die Relevanz der vom maschinellen Lernmodell (200) extrahierten Informationen bewertet, irrelevante oder redundante Informationen erkennt und ausschließt und fehlende Informationen identifiziert, und hierauf basierend Rückmeldungen an das maschinelle Lernmodell (200) gibt, wobei die Interaktion zwischen dem maschinellen Lernmodell (200) und dem Logiknetzwerk (202) in einer bidirektionalen Feedback-Schleife (210) erfolgt, so dass zumindest eine Ausgabe des Logiknetzwerks (202) als Eingabe an den Eingang oder an eine Zwischenstufe des maschinellen Lemmodells (200) rückgekoppelt wird, wodurch das maschinelle Lernmodell (200) seine Extraktionsstrategien basierend auf den Rückmeldungen anpasst und die Verarbeitung iterativ verfeinert;
- Bewertung (S4) des Lebenssachverhaltes durch eine Subsumption der extrahierten Informationen unter die geltenden rechtlichen Normen auf Grundlage der Ergebnisse des Logiknetzwerks (202); und
- Ausgabe (S5) eines Bewertungsergebnisses, das eine Zuordnung des Lebenssachverhaltes zu den rechtlichen Normen umfasst.

2. Verfahren nach Anspruch 1, wobei das maschinelle Lernmodell (200) ein multimodales Modell aufweist, das Text-, Bild- und/oder weitere Beweismittel, insbesondere simultan, verarbeitet, und die Daten in einer integrierten, strukturierten Darstellung für die Subsumption bereitstellt.

3. Verfahren nach Anspruch 1 oder 2, wobei das Logiknetzwerk (202) auf einer Ontologie basiert, die rechtliche Begriffe, Beziehungen und/oder hierarchische Strukturen abbildet, und die Subsumption durch semantische Inferenzverfahren unterstützt.

4. Verfahren nach einem der vorhergehenden Ansprüche, wobei das Logiknetzwerk (202) dynamisch anpassbar ist und/oder neue Regeln und/oder Ontologien, insbesondere automatisch, aus geänderten rechtlichen Vorgaben und/oder Normen integriert.

5. Verfahren nach einem der vorhergehenden Ansprüche, wobei das Logiknetzwerk (202) Inferenzalgorithmen nutzt, um Abhängigkeiten und Ausnahmen innerhalb der rechtlichen Normen zu berücksichtigen, und insbesondere eine präzisere Bewertung komplexer Lebenssachverhalte ermöglicht.

6. Verfahren nach einem der vorhergehenden Ansprüche, wobei das Subsumptionsergebnis eine strukturierte Bewertung in Form einer logischen Erklärung ausgibt, die die Ableitungsschritte zwischen den extrahierten Informationen und den rechtlichen Normen nachvollziehbar darstellt.

7. Verfahren nach einem der vorhergehenden Ansprüche, wobei das Logiknetzwerk (202) ein programmierbares Logikarray und/oder einen Zustandsautomaten umfasst, wobei der Zustandsautomat vorzugsweise als Mealy- oder Moore-Struktur ausgebildet ist, um logische Schlussfolgerungen durch schrittweise Zustandsübergänge basierend auf den extrahierten Informationen und den rechtlichen Normen auszuführen.

8. Computerprogrammprodukt, umfassend Befehle, die bei der Ausführung des Programms durch einen Computer diesen veranlassen, die Schritte des Verfahrens nach einem der Ansprüche 1 bis 7 auszuführen.

9. Vorrichtung (100) zum Erzeugen eines logikbasierten Bewertungsergebnisses zu einer automatisierten Subsumption eines Lebenssachverhaltes unter geltenden rechtlichen Normen, wobei die Vorrichtung (100) eine Auswerte- und Recheneinrichtung aufweist, die dazu ausgebildet ist, die Schritte gemäß dem Verfahren nach einem der Ansprüche 1 bis 7 auszuführen.
